# EUROPÄISCHE PATENTSCHRIFT

(11) **EP 2 310 167 B1**
(45) Veröffentlichungstag und Bekanntmachung des Hinweises auf die Patenterteilung: **24.04.2013**
(21) Anmeldenummer: 09775589.6
(22) Anmeldetag: 07.08.2009
(51) Int. Cl.: B23Q 7/04, G05B 19/4067

(54) **VERFAHREN ZUR ANSTEUERUNG DES WERKSTÜCKMANIPULATORS EINER WERKZEUGMASCHINE NACH EINER BEARBEITUNGSABBRUCH**
METHOD FOR ACTIVATING A WORKPIECE MANIPULATOR OF A MACHINE TOOL AFTER AN INTERRUPTION IN WORKING
PROCÉDÉ DE COMMANDE DU MANIPULATEUR DE PIÈCE D'UNE MACHINE-OUTIL APRÈS UNE INTERRUPTION DU PROCESSUS D'USINAGE

(30) Priorität: 14.08.2008 AT 12712008
(43) Veröffentlichungstag der Anmeldung: 20.04.2011
(73) Patentinhaber: Anger Machining GmbH, 4050 Traun (AT)
(72) Erfinder: HAAS, Roland, A-4222 St. Georgen/Gusen (AT); DIRNBERGER, Klaus, A-4470 Enns (AT)
(74) Vertreter: Hübscher, Helmut
(86) Internationale Anmeldenummer: PCT/AT2009/000304
(87) Internationale Veröffentlichungsnummer: WO 2010/017569

(56) Entgegenhaltungen:
- EP-A1- 1 618 987
- WO-A1-97/10932
- WO-A1-2008/089751
- DE-T2- 69 504 998
- JP-A- 9 091 018

## Beschreibung

### Technisches Gebiet

Die Erfindung betrifft ein Verfahren zur Ansteuerung eines Werkstückmanipulators einer Werkzeugmaschine mit einer Steuereinrichtung, die über eine Recheneinheit mit dem Werkstückmanipulator von einer Maschinenausgangsstellung aus abzufahrende Bearbeitungsbahnen für ein Werkstück vorgibt, wobei das mit dem Werkstückmanipulator mehrachsig translatorisch und vorzugsweise auch rotierend bewegbare Werkstück zur schrittweisen Bearbeitung nacheinander einer Mehrzahl an Werkzeugen zugeführt wird.

### Stand der Technik

Mit bekannten Werkzeugmaschinen (WO 97/10932 A) wird das zu bearbeitende Werkstück an der Werkstückaufnahme des Werkstückträgers festgelegt und mit dem Werkstückträger nacheinander einzelnen Bearbeitungs- bzw. Messwerkzeugen, beispielsweise Bohrern, Fräsern, Schleifern od. dgl., zugeführt. Die Bearbeitungswerkzeuge sind dabei an ortsfest an den am Rahmen des Gestells befestigten Spindeln angeordnet, wobei die Spindeln wahlweise zwischen einer ausgefahrenen Arbeitslage und einer zurückgezogenen Ruhelage verlagerbar sein können, um gegenseitige Behinderungen der Spindeln bei der Bearbeitung durch gerade in Ruhestellung befindliche Spindeln zu vermeiden. Diese bekannten Werkzeugmaschinen zeichnen sich vor allem durch ihren wirtschaftlichen Betrieb aus, der sich insbesondere dadurch ergibt, dass keine Werkzeugwechselzeiten und keine Leerlaufzeiten während eines Bearbeitungsvorganges abgewartet werden müssen, da die Werkzeugmaschine die erforderlichen Werkzeuge in den verschiedenen Spindeln aufnimmt und die Werkzeuge zwischen einzelnen Bearbeitungsvorgängen somit nicht gewechselt werden müssen und bereits vor dem Positionieren des Werkstücks von einer Spindel zu einer anderen hochgefahren werden können. Durch diese Maßnahme werden die Nebenzeiten minimiert und ist eine zügige Bearbeitung der Werkstücke möglich. Zudem ist auf derartigen Vorrichtungen eine mehrspindelige Parallelbearbeitung mehrerer Werkstücke möglich.

Das Werkstück ist mit dem Werkstückträger auf einem Schlitten üblicherweise dreiachsig translatorisch bewegbar und zudem um wenigstens eine Rotationsachse drehbar, um das Werkstück in gewünschter Weise bezüglich der einzelnen, feststehenden Bearbeitungswerkzeuge führen und auch komplexe Bahnen fräsen bzw. bohren oder schleifen zu können.

Als Nachteil ist den bekannten Werkzeugmaschinen dieser Art insbesondere zu eigen, dass der Werkstückmanipulator samt Werkstück für den Fall eines Bearbeitungsabbruches während einer Bearbeitung, beispielsweise durch einen Nothalt, bei einem Werkzeugbruch od. dgl., üblicherweise manuell in die Maschinenausgangsstellung zurückgefahren werden muss, um weitere Beschädigungen am Werkzeug bzw. am Werkstück und insbesondere an benachbarten, in der Werkzeugmaschine angeordneten Werkzeugen zu vermeiden. Wird das Werkstück automatisiert nach dem Bearbeitungsabbruch entlang des kürzesten Weges, aus der derzeitigen Bearbeitungsstellung in die Maschinenausgangsstellung verlagert, kann es zu weiteren Beschädigungen am Werkstück und insbesondere auch an umliegenden Werkzeugen kommen, was teure Nebenzeiten und Nacharbeiten zur Folge hat.

### Darstellung der Erfindung

Ausgehend von einer Technik der eingangs geschilderten Art liegt der Erfindung die Aufgabe zugrunde, ein Verfahren zur Ansteuerung eines Werkstückmanipulators einer Werkzeugmaschine anzugeben, das einerseits bei möglichst kurzen Bearbeitungszeiten, also minimierten Nebenzeiten, eine Bearbeitung eines Werkstückes mit einer erhöhten Anzahl an Werkzeugen ermöglicht und anderseits für den Fall eines Bearbeitungsabbruches ein rasches und sicheres Rückfahren des Werkstückmanipulators mit dem Werkstück in die Maschinenausgangsstellung erlaubt.

Die Erfindung löst diese Aufgabe dadurch, dass der Werkstückmanipulator mit dem Werkstück im Falle eines Bearbeitungsabbruches die dem jeweiligen Bearbeitungsschritt zugeordnete Bewegungsbahn zurück in eine vorausgegangene und vom Werkzeug freigefahrene Position verfahren wird, in welcher der Werkzeugmanipulator wahlweise angehalten oder von der aus der Werkzeugmanipulator in die Maschinenausgangsstellung verlagert wird.

Mit diesen erfindungsgemäßen Maßnahmen ist in einfacher Weise ein automatisiertes Rückverlagern vom Werkstückmanipulator samt Werkstück in die Maschinenausgangsstellung möglich, ohne anderen Bearbeitungsschritten zugeordnete Werkzeuge zu beschädigen bzw. ohne die diesen Bearbeitungsschritten zugeordneten Werkzeugspindeln in Mitleidenschaft zu ziehen. Die Bearbeitung ist grundsätzlich in mehrere Bearbeitungsschritte unterteilt, wobei im einfachsten Fall jedem Bearbeitungswerkzeug ein Bearbeitungsschritt zugeordnet ist. Die Startposition am jeweiligen Bearbeitungswerkzeug kann insbesondere in direkter und gesicherter Weise jeweils aus der Maschinenausgangsstellung bzw. von der Endposition eines vorhergehenden Bearbeitungsschrittes an einem anderen Werkzeug angefahren werden, ohne Beschädigungen am Werkstück bzw. Werkzeugen und Werkzeugspindeln befürchten zu müssen. Ausgehend von diesen Startpositionen wird die Bearbeitung am jeweiligen Werkzeug gestartet und für den Fall eines Bearbeitungsabbruches infolge eines Nothaltes bzw. eines Werkzeugbruches oder dgl. der Werkstückmanipulator mit dem Werkstück die bis zum Bearbeitungsabbruch vorangegangene Bewegungsbahn zurück in die diesem Bearbeitungsschritt zugeordnete Startposition verfahren, aus welcher der Werkstückmanipulator samt Werkstück gegebenenfalls problemlos automatisiert in die Maschinenausgangsstellung verlagert werden kann. Natürlich kann aber auch die gesamte Bewegungsbahn an allen Werkzeugen zur Maschinenausgangsstellung hin zurückgefahren werden.

Mit diesen einfachen Maßnahmen lässt sich ein automatisiertes Freifahren von Werkzeugen im Falle eines Bearbeitungsabbruches auch auf bereits bestehenden Werkzeugmaschinen durch Implementieren einer entsprechenden Steuerung realisieren. Für neu zu schaffende Werkzeugmaschinen lässt sich das Freifahren mit der erfindungsgemäßen Maßnahme in besonders einfacher und kostengünstiger Weise realisieren. Da es sich bei den mit diesen Werkzeugmaschinen gefertigten Werkstücke üblicherweise um Stücke mittlerer bzw. größerer Serien handelt, können, gegebenenfalls durch das Rückfahren entstehende, Werkstückausschüsse üblicherweise problemlos in Kauf genommen werden, nicht aber zusätzlich erhöhte Nebenzeiten der Maschine, die in Folge von Kollisionen des Werkstückes mit intakten Werkzeugen bzw. Bearbeitungsspindeln entstehen und die gegebenenfalls einen Wechsel derselben zur Folge haben müssten.

Wie bereist erwähnt, empfiehlt es sich der Einfachheit halber, wenn jeder Bearbeitungsvorgang an einem Werkzeug einem Bearbeitungsschritt entspricht. Komplexe Bearbeitungen an unterschiedlichen Flächen von Werkstücken können es aber auch erforderlich machen, beispielsweise jeder zu bearbeitenden Fläche eine eigene Start- bzw. Zwischenposition zuzuweisen, sodass gegebenenfalls nur der Bearbeitungsschritt an der jeweiligen Fläche in die Start- bzw. Zwischenposition zurückverfahren werden muss und nicht die Startposition an jedem Werkzeug angefahren werden muss.

Im Falle des Vorliegens einfacher Steuereinrichtungen empfiehlt es sich zur Implementierung der Erfindung auf einer Werkzeugmaschine, wenn die Bewegungsbahn eines jeden Bearbeitungsschrittes von der Maschinenausgangsstellung, insbesondere aber von der jeweiligen Startposition aus bzw. zwischen Endposition an einem Werkzeug zur Startposition am nächsten Werkzeug, mitprotokolliert wird und wenn der Werkstückmanipulator mit dem Werkstück im Falle eines Bearbeitungsabbruches die mitprotokollierte Bewegungsbahn bis zur, vorzugsweise diesem Bearbeitungsschritt zugeordneten, Startposition zurückverfahren wird.

Alternativ dazu kann der Prozessor, von der Position des Bearbeitungsabbruches ausgehend, die zu der diesem Bearbeitungsschritt zugeordneten Startposition führende Inverse der Bewegungsbahn errechnen und mit der Steuereinrichtung den Werkstückmanipulator und das Werkstück die errechnete inverse Bewegungsbahn bis zur vorzugsweise diesem Bearbeitungsschritt zugeordneten Startposition zurückverfahren. Wird die Bearbeitung durch die Steuereinrichtung durch anzufahrende Punkte angegeben, brauchen die Punkte lediglch in der verkehrten Reihenfolge abgefahren werden. Für den Fall, dass die Steuereinrichtung die Bearbeitung durch Vektoren vorgibt, sind die Vektoren zu invertieren und in der umgekehrten Richtung zur Startposition abzufahren.

Zur weiteren Minimierung der Beschädigungswahrscheinlichkeit von Werkzeugen bzw. Werkzeugspindeln empfiehlt es sich, wenn das Werkstück mit dem Werkzeugmanipulator nacheinander einer Mehrzahl an feststehenden, in einem rahmenförmigen Gestell in verschiedenen Lagen positionierten Werkzeugspindeln zugeführt wird, wobei die Werkzeugspindeln zur Werkstückbearbeitung aus einer zurückgezogenen Ruhelage in eine ausgefahrene Arbeitslage verlagerbar sind.

Des Weiteren empfiehlt es sich, wenn die Rückfahrparameter für das Zurückfahren der Bewegungsbahn von der Steuereinrichtung in Abhängigkeit des dem Bearbeitungsschritt zugeordneten Werkzeuges gewählt werden und das Rückfahren mit verminderter Geschwindigkeit erfolgt. Grundsätzlich würde es ja von Vorteil sein, das Werkstück mit dem Werkzeugmanipulator am kürzesten kollisionsfreien Rückweg in die Maschinenausgangsstellung zu verlagern, wobei sich allerdings das Problem stellt, dass dafür aufwändige Kollisionsberechnungen und entsprechende Programme erforderlich wären, die mit der Erfindung allerdings möglichst vermieden werden sollen.

### Kurze Beschreibung der Zeichnung

In der Zeichnung ist die Erfindung anhand eines Ausführungsbeispieles schematisch dargestellt. Es zeigen
- Fig. 1: eine Werkzeugmaschine zur Durchführung des erfindungsgemäßen Verfahrens in Vorderansicht und
- Fig. 2: ein Bewegungsbahnschema für eine auf einer Vorrichtung gemäß Fig. 1. durchgeführte Werkstückbearbeitung.

### Weg zur Ausführung der Erfindung

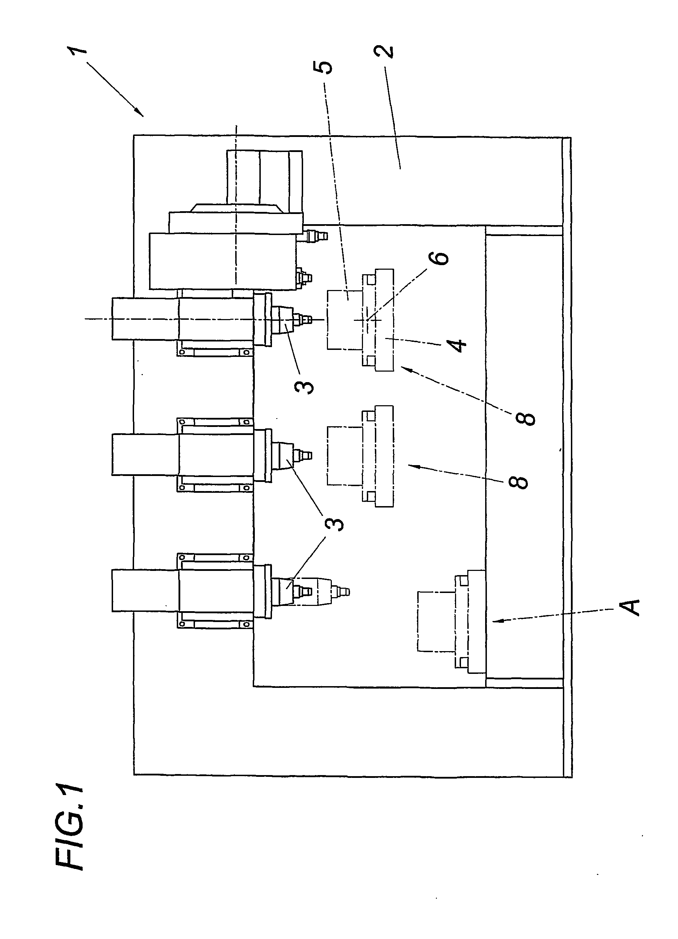

Eine Werkzeugmaschine 1 zur Durchführung des erfindungsgemäßen Verfahrens umfasst eine Mehrzahl von an einem Gestell 2 feststehend angeordneten und in verschiedenen Lagen positionierten Werkzeugspindeln 3. In Fig. 1 wird strichpunktiert angedeutet, dass die einzelnen Werkzeugsspindeln zwischen einer zurückgezogenen Ruhelage und einer ausgefahrenen Arbeitslage verlagerbar sein können, um Behinderungen bei der Bearbeitung von Werkstücken durch andere Werkzeuge zu vermeiden.

Des Weiteren gehört der Werkzeugmaschine 1 ein Werkstückmanipulator 4 zu, der ein zu bearbeitendes Werkstück 5 aufnimmt. Dieser Werkstückmanipulator 4 ist im dargestellten Ausführungsbeispiel einerseits dreiachsig transatorisch bewegbar, also in der Rahmenebene des Gestells 2 und senkrecht zu dieser Rahmenebene und anderseits um eine Achse 6 drehbar ausgebildet. Aus dem Stand der Technik ist es zusätzlich bekannt, auch das Werkstück selbst am .Werkstückmanipulator 4 drehangetrieben zu lagern.

Die Umsetzung des erfindungsgemäßen Verfahrens zur Ansteuerung eines Werkstückmanipulators 4 einer Werkzeugmaschine 1 erfolgt mittels einer nicht näher dargestellten Steuereinrichtung, die über eine ebenfalls nicht näher dargestellte Recheneinheit mit dem Werkstückmanipulator 4 von einer Maschinenausgangsstellung A aus abzufahrende Bewegungsbahnen 76 für ein Werkstück vorgibt, wobei das mit dem Werkstückmanipulator 4 mehrachsig transatorisch und vorzugsweise auch rotierend bewegbare Werkstück 5 zur schrittweisen Bearbeitung nacheinander einer Mehrzahl an Werkzeugen 3 zugeführt wird und wobei jedem Bearbeitungsschritt an einem Werkstück eine Startposition 8 des Werkstückmanipulators 4 zugeordnet ist.

Für den Fall eines Bearbeitungsabbruches infolge eines Nothalts oder Werkzeugschadens wird der Werkstückmanipulator 4 mit dem Werkstück 5 die dem jeweiligen Bearbeitungsschritt vorangegangene Bewegungsbahn 7 zurück in die diesem Bearbeitungsschritt zugeordnete Startposition 8 verfahren, wonach der Werkzeugmanipulator wahlweise angehalten oder in die Maschinenausgangsstellung A verlagert wird.

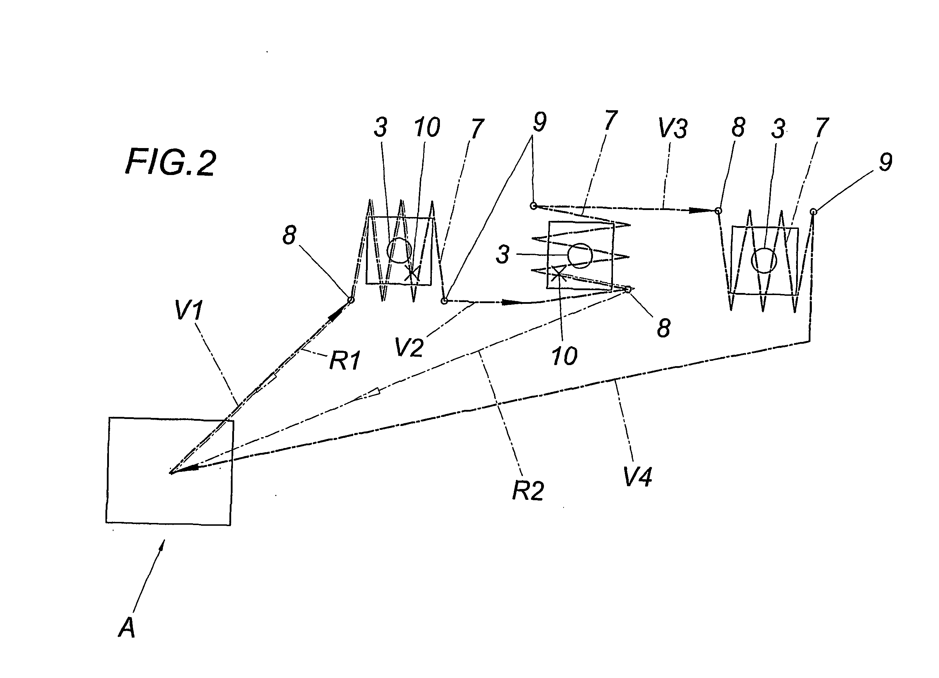

Ein beispielsweises Bewegungsbahnschema ist Fig. 2 zu entnehmen. Ausgehend von der Ausgangsstellung A wird das Werkstück 5 mit dem Werkstückmanipulator 4 entlang des Vektors V1 zur Startposition 8 des ersten Werkzeuges verfahren. Anschließend wird die Bearbeitung an diesem Werkzeug gestartet und das Werkstück 5 in die vorgegebene Bewegungsbahn 7 mit der Steuereinrichtung abgefahren. Nach der Bearbeitung wird der Endpunkt 9 dieser Bearbeitungsbahn erreicht und das Werkstück 5 mit dem Werkstückmanipulator 4 entlang dem Vektor V2 zu dem zweiten Werkzeug und nach einer Bearbeitung an diesem Werkzeug entlang des Vektors V3 zum dritten Werkzeug verlagert. Nach Abschluss der Bearbeitung wird das Werkstück 5 entlang des Vektors V4 in die Maschinenausgangsstellung zu verfahren.

Kommt es im Zuge der Bearbeitung am ersten Werkzeug zu einem Bearbeitungsäbbruch 10, wird das Werkstück 5 mit dem Werkstückmanipulator 4 die vorangegangene Bewegungsbahn bis zur Startposition 8 an diesem Werkzeug, und anschließend bis zur Maschinenausgangsstellung A verlagert. Dies ist im Ausführungsbeispiel der Fig. 2 durch die strichpunktierte Linie R1 angedeutet. Bei einem Bearbeitungsabbruch am zweiten Werkstück erfolgt die Rückbewegung entlang der Strichpunktierten Linie R2.

## Patentansprüche

1. Verfahren zur Ansteuerung eines Werkstückmanipulators (4) einer Werkzeugmaschine (1) mit einer Steuereinrichtung, die über eine Recheneinheit mit dem Werkstückmanipulator (4) von einer Maschinenausgangsstellung (A) aus abzufahrende Bearbeitungsbahnen (6) für ein Werkstück vorgibt, wobei das mit dem Werkstückmanipulator (4) mehrachsig translatorisch und vorzugsweise auch rotierend bewegbare Werkstück (5) zur schrittweisen Bearbeitung nacheinander einer Mehrzahl an Werkzeugen (3) zugeführt wird, **dadurch gekennzeichnet, dass** der Werkstückmanipulator (4) mit dem Werkstück (5) im Falle eines Bearbeitungsabbruches die dem jeweiligen Bearbeitungsschritt zugeordnete Bewegungsbahn (7) zurück in eine vorausgegangene und vom Werkzeug (3) freigefahrene Position (8) verfahren wird, in welcher der Werkzeugmanipulator (4) wahlweise angehalten oder von der aus der Werkzeugmanipulator (4) in die Maschinenausgangsstellung (A) verlagert wird.

2. Verfahren nach Anspruch 1, **dadurch gekennzeichnet, dass** jeder Bearbeitungsvorgang an einem Werkzeug (5) einem Bearbeitungsschritt entspricht und wobei jedem Bearbeitungsschritt an einem Werkstück (5) vorzugsweise eine Start bzw. Zwischenposition (8) des Werkstückmanipulators (4) zugeordnet ist.

3. Verfahren nach Anspruch 1 oder 2, **dadurch gekennzeichnet, dass** die Bewegungsbahn (7) eines jeden Bearbeitungsschrittes von der Maschinenausgangsstellung, insbesondere aber von der jeweiligen Startposition aus bzw. zwischen Endposition an einem Werkzeug zur Startposition am nächsten Werkzeug, mitprotokolliert wird und dass der Werkstückmanipulator (4) mit dem Werkstück (5) im Falle eines Bearbeitungsabbruches die mitprotokollierte Bewegungsbahn (7) bis zur, vorzugsweise diesem Bearbeitungsschritt zugeordneten, Startposition (8) zurückverfahren wird.

4. Verfahren nach Anspruch 1 oder 2, **dadurch gekennzeichnet, dass** der Prozessor von der Position des Bearbeitungsabbruches ausgehend, die zu der diesem Bearbeitungsschritt zugeordneten Start bzw. Zwischenposition (8) führende inverse der Bewegungsbahn (7) errechnet und dass der Werkstückmanipulator (4) mit dem Werkstück (5) anschließend die errechnete inverse Bewegungsbahn (7) bis zur, vorzugsweise diesem Bearbeitungsschritt zugeordneten, Start bzw. Zwischenposition (8) zurückverfahren wird.

5. Verfahren nach einem der Ansprüche 1 bis 4, **dadurch gekennzeichnet, dass** das Werkstück (5) mit dem Werkzeugmanipulator (4) nacheinander einer Mehrzahl an feststehenden, in einem rahmenförmigen Gestell (2) in verschiedenen Lagen positionierten Werkzeugspindeln zugeführt wird, die zur Werkstückbearbeitung gegebenenfalls aus einer zurückgezogenen Ruhelage in eine ausgefahrene Arbeitslage verlagerbar sind.

6. Verfahren nach einem der Ansprüche 1 bis 5, **dadurch gekennzeichnet, dass** die Rückfahrparameter für das Zurückfahren der Bewegungsbahn von der Steuereinrichtung in Abhängigkeit des dem Bearbeitungsschritt zugeordneten Werkzeuges (3) gewählt werden.

## Claims

1. Method for controlling a workpiece manipulator (4) of a machine tool (1) having a control device which, by means of a computing unit, prescribes machining paths (6) for a workpiece which are to be travelled with the workpiece manipulator (4) from a machine starting position (A), wherein the workpiece (5), which can be moved with the workpiece manipulator (4) in a multi-axially translationally and preferably also rotating manner, is fed to a plurality of tools (3) in succession for step-by-step machining, **characterised in that**, in the case of an interruption in machining, the workpiece manipulator (4) with the workpiece (5) is moved back over the movement path (7) assigned to the respective machining step into a preceding position (8) vacated by the tool (3) and in which the tool manipulator (4) is selectively stopped or from which the tool manipulator (4) is moved into the machine starting position (A).

2. Method as claimed in claim 1, **characterised in that** each machining process at a tool corresponds to a machining step, and wherein a starting or intermediate position (8) of the workpiece manipulator (4) is preferably assigned to each machining step at a workpiece (5).

3. Method as claimed in claim 1 or 2, **characterised in that** the movement path (7) of each machining step is jointly logged from the machine starting position, but in particular from the respective starting position or between the end position at one tool to the starting position at the next tool, and that, in the case of an interruption in machining, the workpiece manipulator (4) with the workpiece (5) is moved back along the jointly logged movement path (7) up to the starting position (8) preferably assigned to this machining step.

4. Method as claimed in claim 1 or 2, **characterised in that**, starting from the position of the interruption in machining, the processor calculates the inverse of the movement path (7) leading to the starting or intermediate position (8) assigned to this machining step, and that the workpiece manipulator (4) with the workpiece (5) is then moved back along the calculated inverse movement path (7) up to the starting or intermediate position (8) preferably assigned to this machining step.

5. Method as claimed in any one of claims 1 to 4, **characterised in that** the workpiece (5) with the tool manipulator (4) is fed successively to a plurality of fixed tool spindles positioned at different positions in a frame-like rack (2), which tool spindles are optionally movable from a retracted idle position to extended working position for workpiece machining.

6. Method as claimed in any one of claims 1 to 5, **characterised in that** the return parameters for the return travel on the movement path are chosen by the control device depending on the tool (3) assigned to the machining step.

## Revendications

1. Procédé de commande d'un manipulateur de pièce (4) d'une machine-outil (1), avec un dispositif de commande qui prédéfinit par le biais d'une unité de calcul avec le manipulateur de pièce (4) à partir d'une position de départ de la machine (A) des trajectoires d'usinage (6) à parcourir pour une pièce, la pièce (5) pouvant être déplacée à l'aide du manipulateur de pièce (4) en translation selon plusieurs axes et de préférence aussi en rotation, étant acheminée pour un usinage par étape, successivement, à une pluralité d'outils (3), **caractérisé en ce que** le manipulateur de pièce (4) avec la pièce (5) est renvoyé, en cas d'interruption d'un processus d'usinage, sur la trajectoire de déplacement (7) associée à l'étape d'usinage concernée, dans une position (8) précédente et dégagée de l'outil (3), dans laquelle le manipulateur d'outil (4) est sélectivement stoppé ou depuis laquelle le manipulateur d'outil (4) est déplacé dans la position de départ de la machine (A).

2. Procédé selon la revendication 1, **caractérisé en ce que** chaque opération d'usinage au niveau d'un outil correspond à une étape d'usinage et de préférence une position de départ ou intermédiaire (8) du manipulateur de pièce (4) étant associée à chaque étape d'usinage, au niveau d'une pièce (5).

3. Procédé selon la revendication 1 ou 2, **caractérisé en ce que** la trajectoire de déplacement (7) de chaque étape d'usinage de la position de départ de la machine, en particulier aussi de chaque position de départ ou entre la position finale au niveau d'un outil à la position de départ, au niveau de l'outil suivant, est journalisée et **en ce que** le manipulateur de pièce (4) avec la pièce (5) est renvoyé, en cas d'une interruption du processus d'usinage, sur la trajectoire de déplacement (7) journalisée jusqu'à la position de départ (8) associée de préférence à cette étape d'usinage.

4. Procédé selon la revendication 1 ou 2, **caractérisé en ce que** le processeur calcule depuis la position de l'interruption du processus d'usinage, la position de départ ou intermédiaire (8) associée à cette étape d'usinage, à l'inverse de la trajectoire de déplacement (7) et **en ce que** le manipulateur de pièce (4) avec la pièce (5) est replacé, ensuite, sur la trajectoire de déplacement (7) calculée inversement, jusqu'à la position de départ ou intermédiaire (8) associée de préférence à cette étape d'usinage.

5. Procédé selon l'une des revendications 1 à 4 **caractérisé en ce que** la pièce (5) est avec le manipulateur d'outil (4) acheminée, successivement, à une pluralité de broches porte-outils positionnées à différents endroits, dans un châssis (2) en forme de cadre et fixé, qui peuvent être déplacées pour l'usinage de pièces, le cas échéant, d'une position de repos retirée à une position de travail déployée.

6. Procédé selon l'une des revendications 1 à 5, **caractérisé en ce que** les paramètres de retour pour le recul de la trajectoire de déplacement sont sélectionnés par le dispositif de commande en fonction de l'outil (3) associé à l'étape d'usinage.
